# EUROPEAN PATENT SPECIFICATION

(11) **EP 2 113 706 B1**
(45) Date of publication and mention of the grant of the patent: **04.07.2012**
(21) Application number: 09005929.6
(22) Date of filing: 29.04.2009
(51) Int. Cl.: F16L 33/207

(54) **Press fit connector with improved coupling part for holding a press sleeve**
Druckverbinder mit verbessertem Kupplungselement zum Halten einer Druckhülse
Connecteur d'insertion avec pièce de couplage amélioré pour maintenir un manchon de presse

(30) Priority: 29.04.2008 NL 1035370
(43) Date of publication of application: 04.11.2009
(73) Proprietor: Wavin B.V., 8011 CW Zwolle (NL)
(72) Inventor: Nyhuis, Thorsten, 49843 Uelsen (DE); Prenger, Jan Hendrik, 7793 HG Hoogenweg (NL)
(74) Representative: de Vries, Janna

(56) References cited:
- EP-A- 0 067 063
- EP-A- 1 126 206
- DE-C1- 19 735 919
- DE-U1- 29 901 935
- GB-A- 561 283
- US-A- 2 410 600

## Description

The invention relates to a press fit connector for a pipe, comprising a spigot for insertion into a pipe end, and a sleeve which is to be compressed around said pipe end so as to clamp it around the spigot.

Connectors of this type are known, for instance from EP 0 611911. This known connector comprises a plastic coupling part for coupling the sleeve to the spigot. The coupling part comprises a cylindrical body, with first and second engaging means. The first engaging means are located on a first end portion of the cylindrical body and designed to engage the sleeve in a form-fit, press fit and/or material closing manner. The second engaging means are located on the other end portion of the cylindrical body and comprise a circumferential rim which is said to extend radially inward so far so as to hold the coupling part onto the spigot. An advantage of these second engaging means is that they hardly take up any space, at least not in axial direction, and thus do not compromise the connector's overall dimensions. The second engaging means moreover can fulfil a double function, in that they can serve as isolator between the spigot at the one hand and the sleeve and/or inserted pipe on the other hand. This is in particular advantageous in case where said components comprise metal parts.

A disadvantage of this known coupling part, however, is that for a proper fit between the second engaging means and the spigot, both parts must be manufactured within tight tolerances. If the fit is too loose, the coupling part may come off prematurely, e.g. during transport. If the fit is too tight, assembly will be difficult if not impossible. Such tight tolerances generally result in increased costs, e.g. for manufacturing and assembly.

It is an object of the invention to provide a connector of the above described type, wherein the disadvantage of the known coupling part is overcome or at least reduced, while maintaining its advantages. To that end, a connector according to the invention comprises a coupling part having first engaging means, arranged to engage the spigot at a first engaging position, and second engaging means, arranged to engage the sleeve at a second engaging position, wherein the second engaging position is located downstream of the first engaging position, as seen in an assembly direction in which the sleeve is assembled onto the spigot.

According to the invention, the first engaging means may be positioned on a portion of the coupling part that in use extends within an annular gap formed between the spigot and the sleeve. Such coupling part portion can be readily designed to have good resilient properties, at least in radial direction, for instance by providing the portions with axial slits and/or by locally reducing its wall thickness. Accordingly, at least part of the engaging capacity of said first engaging means may derive from said good resilient properties of the coupling part. This obviates the need for tight manufacturing tolerances, which in turn may lower production costs and facilitate assembly.

According to one aspect of the invention, the first engaging means may be of a snap-fit type. Such engaging means may contribute to ease of assembly.

According to another aspect of the invention, the second engaging means are arranged to retain the sleeve onto the coupling part itself. Thanks to such second engaging means, the coupling part can be connected to the sleeve first, i.e. before mounting the sleeve (with said pre-connected coupling part) onto the spigot. This provides for increased ease of assembly as compared to many prior art solutions, which teach to mount the sleeve onto the spigot first, and subsequently mount the coupling part into the annular gap formed between the spigot and the sleeve. The latter assembly step requires a high degree of accuracy and possibly a special tool to fit the coupling part into said gap.

According to a further aspect of the invention, the first engaging means may be located at an inner surface of the coupling part and the second engaging means may be located at an outer surface of the coupling part. With such locations, the first and second engaging means can be spaced at a relatively small axial distance from one another, on opposed surfaces of the coupling part, thereby allowing the axial length of the coupling part and with that the axial length of the connector to be minimized.

According to another aspect of the invention a first end portion of the coupling part may be arranged to be radially sandwiched between the spigot and the sleeve, and a second end portion of the coupling part may be arranged to be axially sandwiched between the spigot and the sleeve, in assembled condition. Such coupling part may function as isolator, preventing direct contact between the fitting body at the one hand, and the sleeve and/or an inserted pipe end at the other hand. Such coupling part can moreover be of compact design, adding hardly to the connector's overall dimensions.

According to yet a further aspect of the invention, the first and second engaging means may both be surrounded by the sleeve, in assembled condition. In such case, the said first and second engaging means may be sandwiched, i.e. clamped between the spigot and the sleeve which may result in a very stable connection, with good resistance against bending torques.

According to yet another aspect of the invention, the coupling part and the spigot may be designed to engage each other, in assembled condition, along a wedge shaped engaging surface. In further elaboration, the first engaging means may be located on, or form part of said wedge shaped engaging surface. With such wedge shaped design, any clearance between the said components can be pushed away by advancing the coupling part in assembly direction. Accordingly, the manufacturing tolerances may be even coarser.

Further advantageous embodiments of a press fit connector according to the present invention are set forth in the dependent claims.

DE 197 35 919 discloses a press fit connector having a spigot, a sleeve and a substantially annular coupling part for coupling the sleeve to the spigot. The coupling part comprises first engaging means for engaging the spigot and second engaging means for engaging the sleeve. The first engaging means are formed by a radial inner surface of the coupling part and the second engaging means are formed by a circumferential groove in the coupling part. In mounted condition, the engaging position of the first engaging means is substantially aligned with the engaging position of the second engaging means, as seen in radial direction.

To explain the invention, an exemplary embodiment thereof will hereinafter be described with reference to the accompanying drawings, wherein:
FIG. 1 shows a connector according to the invention; in exploded view;
FIG. 2 shows the respective components of the connector of Figure 1, in cross sectional view;
FIG. 3 shows the connector of Figure 2, in assembled condition;
FIG. 4 shows detail A of the connector of Figure 2; and
FIG. 5 shows detail B of the connector of Figure 2.

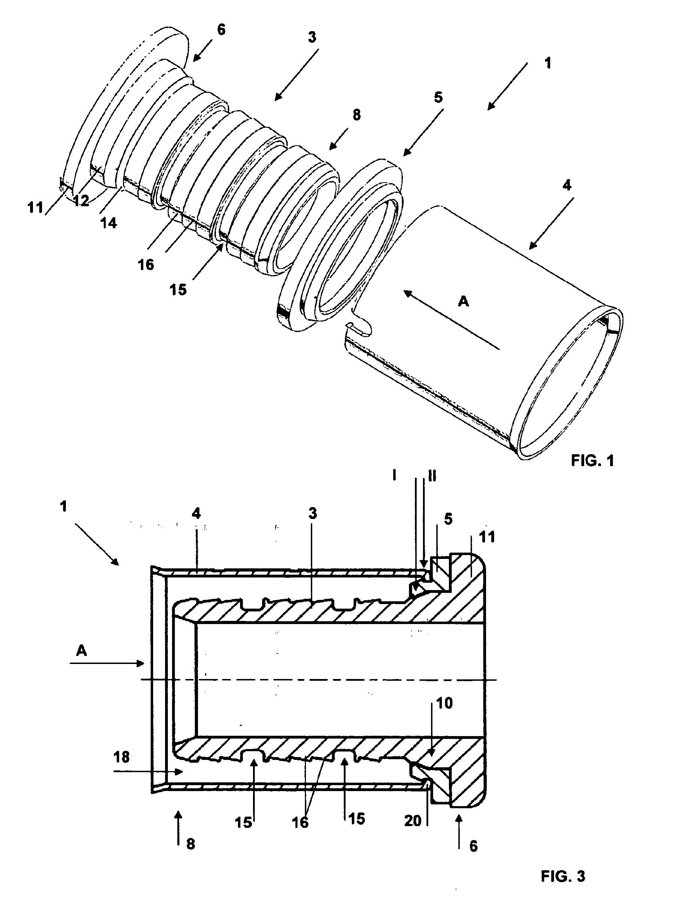

The connector 1 shown in Figures 1-3 comprises a spigot 3, a sleeve 4 and a coupling part 5 for holding the sleeve 4 onto the spigot 3.

The spigot 3 is of substantially tubular shape and typically made of plastic or metal. It has a first end 6 that may for instance be connected to a fitting body (not shown) and a free, second end 8 that in use is inserted into a pipe end (not shown). To facilitate such insertion, the second end 8 may for instance be rounded, chamfered or be provided with some other friction reducing profile.

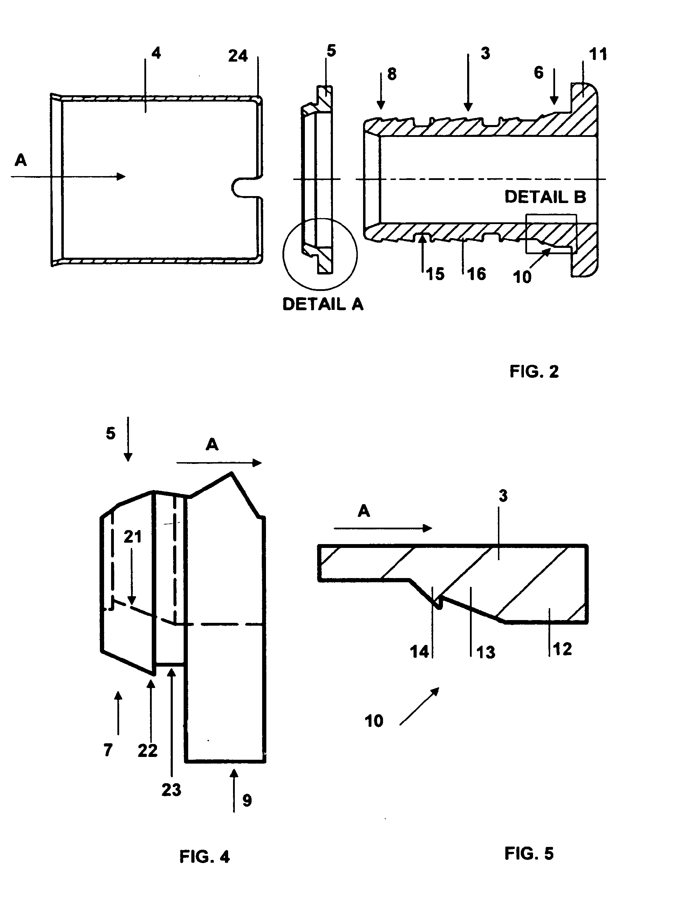

The spigot 3 is near its first end 6 provided with a seat 10, designed to cooperate with the coupling part 5. This seat 10, in the illustrated embodiment shown in Figure 5, comprises a cylindrical portion 12 of increased outer diameter and a conical transition portion 13 which ends in first retention means 14. These first retention means 14 are arranged to cooperate with first engaging means 21 of the coupling part 5, so as to allow said coupling part 5 to be mounted onto the seat 10 (in the assembly direction indicated by arrow A) and prevent removal of the coupling part 5 in the opposite direction. To that end, the first retention means 14 may for instance comprise one or more barb shaped projections or a circumferential ridge, as shown. Other embodiments are possible, depending on the design of the first engaging means 21. The seat 10 may at its other end be provided with stopper means 11, to limit movement of the coupling part 5 in the assembly direction A. These stopper means 11 may for instance comprise a stepped shoulder, a circumferential flange and/or several projections or notches.

The spigot 3 may further be provided with one or more circumferential grooves 15 for holding sealing means (not shown), such as for instance an O-ring. The spigot 3 may be provided with gripping means 16 for resisting removal of the spigot 3 from a pipe end in which it has been inserted. Such gripping means 16 may for instance comprise one or more tooth shaped ridges extending along at least part of the spigot's outer circumference.

The sleeve 4 is of substantially cylindrical design and is typically made of metal. The sleeve 4 is dimensioned to surround the spigot 3 at some radial distance so as to enclose a ring shaped gap 18, suitable for receiving a pipe end (not shown). The sleeve 4 is near one or both of its ends provided with second retention means 24, arranged for cooperation with second engaging means 22 of the coupling part 5. The second retention means 24 may for instance be formed by bending the sleeve's edge or part(s) thereof, inward (as shown) and/or outward. Alternatively, the sleeve 4 may be provided with notches, indentations or the like profiles.

The coupling part 5 is of substantially annular shape and typically made of a slightly resilient material, such as for instance plastic. The coupling part 5 comprises first engaging means 21 for engaging the spigot 3 and second engaging means 22 for engaging the press sleeve 4. As best seen in Figure 4, the first engaging means 21 can be located at an inner side of the coupling part 5. They may for instance comprise one or more barb shaped projections or a barb shaped ridge extending along at least part of the coupling part's inner circumference. Preferably, the first engaging means 21 are shaped such that the inner contour of the coupling part 5 substantially matches the outer contour of the seat 10, as will be appreciated by comparing Figures 4 and 5.

The second engaging means 22 can be located at an outer side of the coupling part 5 and may likewise be shaped as barb shaped projections or a ridge extending along at least part of the coupling part's outer circumference. In the illustrated embodiment, the first and second engaging means 21, 22 are located at a first end portion 7 of the coupling part 5, where the coupling part 5 has a relatively small wall thickness and consequently, certain flexibility in radial direction. The first engaging means 21 are located slightly closer to the free edge of said end portion 7 than the second engaging means 22, or in other words, when seen in the assembly direction A of the coupling part 5, the first engaging means 21 are located upstream of the second engaging means 22. The other end portion of the coupling part 5 may be provided with a circumferential flange 9, having an outer diameter that preferably at least matches that of the sleeve 4. As best seen in Figure 4, a groove 23 is formed between said flange 9 and the second engaging means 22.

The connector 1 can be assembled as follows. First, the coupling part 5 is with its first end portion 7 inserted into the sleeve 4, until the second engaging means 22 snap behind the second retention means 24, thereby engaging the sleeve 4 at a second engaging position II (as indicated in Figure 3). The second retention means 24 are thus retained in the groove 23. The second engaging means 22 are thus arranged to retain the sleeve 4 onto the coupling part 5, before the coupling part 5 and/or the sleeve 4 is mounted onto the spigot 3.

Next, the coupling part 5 (with the attached sleeve 4) is slid around the spigot 3 and onto the seat 10 until the first engaging means 21 snap passed the first retention means 14, thereby engaging the spigot 3 at a first engaging position I. As can be seen from Figure 3, this first engaging position I is located upstream of the second engaging position II, as seen in the assembly direction A of the sleeve 4.

Both snap-actions are possible thanks to the beneficial location of the first and second engaging means 21, 22 on the first end portion 7 of the coupling part 5, featuring good radial flexibility and resilience.

The coupling part 5 may be progressed along the seat 10 till the flange 9 abuts the stopper means 11. In mounted conditions, the flange 9 may function as separation wall, preventing direct contact between the spigot 3 on the one hand and the sleeve 4 and/or an inserted pipe end at the other hand. This is in particular advantageous when the spigot 3 is made of metal.

From Figures 3-5, it will be appreciated that in assembled condition, the first engaging means 21 and the conical portion 13 of the seat 10 engage each other along a wedge shaped engaging surface. As a result, any clearance between said seat 10, the coupling part 5 and/or the sleeve 4 can be pushed away as the coupling part 5 is progressed along the seat 10 towards the stopper means 11. Accordingly, the end portion 7 of the coupling part 5 becomes snugly sandwiched between the spigot 3 and the sleeve 4. This results in a stable connection between the aforesaid components and moreover obviates the need for tight manufacturing tolerances.

The invention is not in any way limited to the exemplary embodiments presented in the description and drawing. All combinations (of parts) of the embodiments shown and described are explicitly understood to be incorporated within this description and are explicitly understood to fall within the scope of the invention. Moreover, many variations are possible within the scope of the invention, as outlined by the claims.

## Claims

1. Press fit connector (1) for connecting a pipe, the connector (1) comprising a spigot (3), a sleeve (4) and a coupling part (5) for coupling the sleeve (4) to the spigot (3), the coupling part (5) comprising first engaging means (21) for engaging the spigot (3) at a first engaging position (I), and second engaging means (22) for engaging the sleeve (4) at a second engaging position (II), wherein the second engaging means (22) are arranged to retain the sleeve (4) on the coupling part (5) itself, **characterised in that** said second engaging position (II) is located downstream of the first engaging position (I), as seen in an assembly direction (A) in which the sleeve (4) is assembled onto the spigot (3).

2. Press fit connector (1) according to claim 1, wherein the first engaging means (21) are of a snap-fit type.

3. Press fit connector (1) according to anyone of the preceding claims, wherein the second engaging means (22) are located at an outer surface of the coupling part (5).

4. Press fit connector (1) according to anyone of the preceding claims, wherein the first engaging means (21) are located at an inner surface of the coupling part (5).

5. Press fit connector (1) according to anyone of the preceding claims, wherein the first and/or the second engaging means (21, 22) are located at a portion of the coupling part (5) which is resilient in radial direction.

6. Press fit connector (1) according to anyone of the preceding claims, wherein in assembled condition, the first and second engaging means (21, 22) are surrounded by the sleeve (4).

7. Press fit connector (1) according to anyone of the preceding claims, wherein the coupling part (5) and the spigot (3) are designed to engage each other, in assembled condition, along a wedge shaped engaging surface.

8. Press fit connector (1) according to claim 7, wherein the first engaging means (21) are located on, or form part of said wedge shaped engaging surface.

9. Press fit connector (1) according to anyone of the preceding claims, wherein the coupling part (5) is made of an isolating material, for instance plastic.

10. Press fit connector (1) according to anyone of the preceding claims, wherein a first end portion (7) of the coupling part (5) is arranged to be sandwiched in radial direction between the spigot (3) and the sleeve (4), and a second end portion (9) of the coupling part (5) is arranged to be sandwiched in axial direction between the spigot (3) and the sleeve (4), in assembled condition.

## Patentansprüche

1. Presspassungsverbinder (1) zum Verbinden eines Rohrs, wobei der Verbinder (1) einen Zapfen (3), eine Hülse (4) und einen Kopplungsteil (5) zum Koppeln der Hülse (4) am Zapfen (3) aufweist, wobei der Kopplungsteil (5) ein erstes Eingriffsmittel (21) zum Eingriff des Zapfens (3) an einer ersten Eingriffsposition (I), und ein zweites Eingriffsmittel (22) zum Eingreifen der Hülse (4) an einer zweiten Eingriffsposition (II) aufweist, wobei das zweite Eingriffsmittel (22) die Hülse (4) am Kopplungsteil (5) selbst zurückhalten kann, **dadurch gekennzeichnet, dass** die zweite Eingriffsposition (II) in einer Montagerichtung (A) betrachtet, in der die Hülse (4) auf den Zapfen (3) angebracht ist, stromabwärts der ersten Eingriffsposition (I) gelegen ist.

2. Presspassungsverbinder (1) gemäß Anspruch 1, bei dem das erste Eingriffsmittel (21) eine Schnappverbindung ist.

3. Presspassungsverbinder (1) gemäß einem der vorangegangenen Ansprüche, bei dem das zweite Eingriffsmittel (22) an einer Außenfläche des Kopplungsteils (5) gelegen ist.

4. Presspassungsverbinder (1) gemäß einem der vorangegangenen Ansprüche, bei dem das erste Eingriffsmittel (21) an einer Innenfläche des Kopplungsteils (5) gelegen ist.

5. Presspassungsverbinder (1) gemäß einem der vorangegangenen Ansprüche, bei dem das erste und/oder das zweite Eingriffsmittel (21, 22) an einem Abschnitt des Kopplungsteils (5) gelegen ist, der in Radialrichtung elastisch ist.

6. Presspassungsverbinder (1) gemäß einem der vorangegangenen Ansprüche, bei dem das erste und das zweite Eingriffsmittel (21, 22) im zusammengebauten Zustand durch die Hülse (4) umgeben sind.

7. Presspassungsverbinder (1) gemäß einem der vorangegangenen Ansprüche, bei dem der Kopplungsteil (5) und der Zapfen (3) so ausgelegt sind, dass sie im zusammengebauten Zustand entlang einer keilförmigen Eingriffsfläche ineinander greifen.

8. Presspassungsverbinder (1) gemäß Anspruch 7, bei dem das erste Eingriffsmittel (21) an der keilförmigen Eingriffsfläche gelegen ist oder einen Teil hiervon bildet.

9. Presspassungsverbinder (1) gemäß einem der vorangegangenen Ansprüche, bei dem der Kopplungsteil (5) aus einem Isolationsmaterial, zum Beispiel Plastik, gefertigt ist.

10. Presspassungsverbinder (1) gemäß einem der vorangegangenen Ansprüche, bei dem im zusammengebauten Zustand ein erster Endabschnitt (7) des Kopplungsteils (5) in Radialrichtung zwischen den Zapfen (3) und die Hülse (4) eingelegt werden kann, und ein zweiter Endabschnitt (9) des Kopplungsteils (5) in Axialrichtung zwischen den Zapfen (3) und die Hülse (4) eingelegt werden kann.

## Revendications

1. Connecteur (1) à ajustement avec serrage pour raccorder un tuyau, le connecteur (1) comprenant un fausset (3), un manchon (4) et une pièce de couplage (5) pour coupler le manchon (4) au fausset (3), la pièce de couplage (5) comprenant des premiers moyens (21) d'engagement pour engager le fausset (3) à une première position d'engagement (I), et des deuxièmes moyens d'engagement (22) pour engager le manchon (4) à une deuxième position d'engagement (II), dans lequel les deuxièmes moyens d'engagement (22) sont agencés pour retenir le manchon (4) sur la pièce (5) de couplage elle-même, **caractérisé en ce que** ladite deuxième position d'engagement (II) est située en aval de la première position d'engagement (I), lorsqu'on regarde dans une direction (A) d'assemblage dans laquelle le manchon (4) est assemblé sur le fausset (3).

2. Connecteur (1) à ajustement avec serrage selon la revendication 1, dans lequel les premiers moyens d'engagement (21) sont d'un type à encliquetage.

3. Connecteur (1) à ajustement avec serrage selon l'une des revendications précédentes, dans lequel les deuxièmes moyens (22) d'engagement sont situés sur une surface extérieure de la pièce (5) de couplage.

4. Connecteur (1) à ajustement avec serrage selon l'une des revendications précédentes, dans lequel les premiers moyens (22) d'engagement sont situés sur une surface intérieure de la pièce (5) de couplage.

5. Connecteur (1) à ajustement avec serrage selon l'une des revendications précédentes, dans lequel les premiers et/ou les deuxièmes moyens d'engagement (21, 22) sont situés sur une partie de la pièce de couplage (5) qui est élastique dans une direction radiale.

6. Connecteur (1) à ajustement avec serrage selon l'une des revendications précédentes, dans lequel, à l'état assemblé, les premiers et les deuxièmes moyens d'engagement (21, 22) sont entourés par le manchon (4).

7. Connecteur (1) à ajustement avec serrage selon l'une des revendications précédentes, dans lequel la pièce de couplage (5) et le fausset (3) sont conçus pour s'engager l'un et l'autre, à l'état assemblé, le long d'une surface d'engagement en forme de coin.

8. Connecteur (1) à ajustement avec serrage selon la revendication 7, dans lequel les premiers moyens d'engagement (21) sont situés sur ladite surface d'engagement en forme de coin, ou font partie de celle-ci.

9. Connecteur (1) à ajustement avec serrage selon l'une des revendications précédentes, dans lequel la pièce de couplage (5) est réalisée en un matériau isolant, par exemple du plastique.

10. Connecteur (1) à ajustement avec serrage selon l'une des revendications précédentes, dans lequel une première partie d'extrémité (7) de la pièce de couplage (5) est agencée pour être prise en tenaille dans une direction radiale entre le fausset (3) et le manchon (4), et une deuxième partie d'extrémité (9) de la pièce de couplage (5) est agencée pour être prise en tenaille dans une direction axiale entre le fausset (3) et le manchon (4), à l'état assemblé.
